(19)

Europäisches
Patentamt

European
Patent Office

Office européen
des brevets

(11) **EP 4 768 650 A1**

(12) **EUROPEAN PATENT APPLICATION**
published in accordance with Art. 153(4) EPC

(43) Date of publication:
**01.07.2026 Bulletin 2026/27**

(21) Application number: **25857909.3**

(22) Date of filing: **07.01.2025**

(51) International Patent Classification (IPC):
*D02G 3/38* (2006.01)   *B29B 11/16* (2006.01)
*D02G 3/04* (2006.01)   *D02G 3/36* (2006.01)
*D02G 3/44* (2006.01)   *B29K 105/10* (2006.01)

(52) Cooperative Patent Classification (CPC):
**B29B 11/16; D02G 3/04; D02G 3/36; D02G 3/38;
D02G 3/44;** B29K 2105/10

(86) International application number:
**PCT/JP2025/000190**

(87) International publication number:
**WO 2026/088457 (30.04.2026 Gazette 2026/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2024 JP 2024186476**

(71) Applicants:
• **Toyobo Co., Ltd.**
  **Kita-ku**
  **Osaka-shi, Osaka 530-0001 (JP)**

• **Toyobo Textile Co., Ltd.**
  **Osaka-shi, Osaka 530-0004 (JP)**

(72) Inventors:
• **KAMIYA, Takeru**
  **Osaka-shi, Osaka 530-0004 (JP)**
• **TAKATA, Seiko**
  **Imizu-shi, Toyama 939-0295 (JP)**
• **TOYODA, Kengo**
  **Osaka-shi, Osaka 530-0001 (JP)**

(74) Representative: **Matkowska, Franck**
  **Matkowska & Associés**
  **9, rue Jacques Prévert**
  **59650 Villeneuve d'Ascq (FR)**

(54) **COMPOSITE SPUN YARN FOR FIBER-REINFORCED THERMOPLASTIC**

(57)    The present invention provides a composite spun yarn for fiber-reinforced thermoplastics in which the disturbance of the orientation of the continuous reinforcing fibers can be sufficiently prevented during FRP production, and in which molten thermoplastic resin can easily penetrate into the gaps between single fibers constituting the reinforcing filament fibers forming the core during production of molded articles. Thanks to these features, the composite spun yarn of the present invention can exhibit good moldability, and can produce molded articles exhibiting high strength. A composite spun yarn for fiber-reinforced thermoplastics, characterized in that the composite spun yarn comprises a fiber bundle having substantially no twist and a spun yarn (C) wound around the fiber bundle, wherein the fiber bundle is composed of a core (A) and a sheath (B), and wherein the core (A) contains at least continuous reinforcing fibers (a1), the sheath (B) is made of thermoplastic staple fibers, and the spun yarn (C) is made of thermoplastic staple fibers.

[FIG. 1]

## Description

Technical Field

The present invention relates to a composite spun yarn for fiber-reinforced thermoplastics, which is composed of continuous reinforcing fibers and thermoplastic fibers.

Background Art

Metals have conventionally been used as a constituent material for articles requiring light weight and strength, such as automobiles, airplanes, and prosthetic limbs. Recently, however, metals have been replaced by fiber-reinforced plastics (FRPs) blended with carbon fiber or glass fiber, which are particularly excellent in terms of light weight, high rigidity, high strength, durability, etc. Reinforcing fibers used in FRPs have a form of filament fibers, staple fibers, whiskers, etc. As to matrix resins, thermosetting resins such as epoxy resins are mainly used. However, thermoplastic resins such as polyamides and polyphenylene ethers are used in some cases.

When a thermoplastic resin is used as the matrix, staple fibers are mainly used as reinforcing fibers. Products manufactured by injection molding exhibit low rigidity and strength. This is because the reinforcing fibers are short in length. In order to compensate for this problem, wall thickness of the products needs to be increased, resulting in new problem of heavy weight.

In recent years, composite yarns containing continuous reinforcing fibers and thermoplastic filament fibers have been developed. The composite yarns are not final processed products. The continuous reinforcing fibers in the composite yarns are not impregnated with thermoplastic resin. Therefore, the composite yarns exhibit excellent flexibility and processability. For example, the resulting composite yarns can be knitted or woven alone or with other fibers so as to form intermediate materials called fabric preforms, or braided into hollow pipe-shaped preforms. Patent Document 1 proposes a composite yarn obtained by aligning opened continuous reinforcing fibers and thermoplastic filament fibers and entangling them with each other by using compressed air. Patent Document 2 proposes a covering yarn in which thermoplastic filament fibers are spirally wound around continuous reinforcing fibers. However, when these composite yarns are heated and melted so as to form FRP, the thermoplastic filament fibers shrink, which causes disturbance of an orientation of the continuous reinforcing fibers. As a result, the continuous reinforcing fibers cannot fully exhibit their inherent capabilities in the resulting molded articles, resulting in poor strength of the molded article.

In order to deal with such problems of the prior art, the Applicant proposed, in Patent Document 3, a composite spun yarn exhibiting excellent resin impregnation and processability in which continuous reinforcing fibers and thermoplastic staple fibers are blended with each other and the resulting fiber bundle is wound by thermoplastic filament fibers for binding. In Patent Document 3, most of the thermoplastic fibers to be used are thermoplastic staple fibers. Thanks to this feature, the disturbance of the orientation of the continuous reinforcing fibers caused by the shrinkage of the thermoplastic fibers during heating and melting is prevented to some extent, and thus strength of the resulting molded article is also excellent. However, the disturbance of the orientation caused by the shrinkage of the thermoplastic fibers cannot be completely prevented. Accordingly, it is difficult to say that the inherent capabilities of the continuous reinforcing fibers are fully exhibited.

Prior Art Documents

Patent Documents

Patent Document 1: Japanese Patent Application Laid-Open (JP-A) No. 2013-237945
Patent Document 2: Japanese Patent Application Laid-Open (JP-A) No. 2021-066974
Patent Document 3: Japanese Patent Application No. 2023-064679

Disclosure of the Invention

Problem that the Invention is to Solve

The present invention was devised to solve the problems of the prior art described above. An object of the present invention is to provide a composite spun yarn for fiber-reinforced thermoplastics in which the disturbance of the orientation of the continuous reinforcing fibers can be sufficiently prevented during FRP production, and in which molten thermoplastic resin can easily penetrate into the gaps between single fibers constituting the reinforcing filament fibers (continuous reinforcing fibers) forming the core during production of molded articles. Thanks to these features, the composite spun yarn of the present invention can exhibit good moldability, and can produce molded articles exhibiting high strength.

Means for Solving the Problem

The inventors of the present invention have earnestly studied to achieve the above-mentioned object. As a result, the inventors found that, when a composite spun yarn has a structure in which a spun yarn made of thermoplastic staple fibers is wound around a fiber bundle having a core-sheath structure composed of a core containing continuous reinforcing fibers and a sheath made of thermoplastic staple fibers, orientation of the continuous reinforcing fibers is not affected by the shrinkage of the thermoplastic fibers during molding (i.e. when the obtained composite spun yarn is filled into a mold and the thermoplastic staple fibers are melted by heating), and thus the orientation of the continuous reinforcing fibers is not disturbed. Further, the inventors found that, when a composite spun yarn has such structure, the molten thermoplastic resin derived from the staple fibers in the sheath can sufficiently penetrate into the gaps between single fibers constituting the continuous reinforcing fibers in the core of the fiber bundle during molding. Consequently, the inventors found that a molded product having uniform physical properties that are excellent in moldability and strength can be obtained from such composite spun yarn. The present invention has been completed based on the above findings.
That is, the present invention has the following features (1) to (11).

(1) A composite spun yarn for fiber-reinforced thermoplastics, characterized in that the composite spun yarn comprises a fiber bundle having substantially no twist and a spun yarn (C) wound around the fiber bundle, wherein the fiber bundle is composed of a core (A) and a sheath (B), and wherein the core (A) contains at least continuous reinforcing fibers (a1), the sheath (B) is made of thermoplastic staple fibers, and the spun yarn (C) is made of thermoplastic staple fibers.
(2) The composite spun yarn for fiber-reinforced thermoplastics according to (1), wherein the core (A) is composed only of the continuous reinforcing fibers (a1).
(3) The composite spun yarn for fiber-reinforced thermoplastics according to (1), wherein the core (A) is composed of a spun yarn (a2) made of thermoplastic staple fibers and the continuous reinforcing fiber (a1) arranged so as to cover the spun yarn (a2).
(4) The composite spun yarn for fiber-reinforced thermoplastics according to (1), wherein the core (A) is composed of a mixture of the continuous reinforcing fibers (a1) and thermoplastic staple fibers (a3).
(5) The composite spun yarn for fiber-reinforced thermoplastics according to (1), wherein the continuous reinforcing fibers (a1) comprise at least one kind of fiber selected from the group consisting of carbon fiber, glass fiber, basalt fiber, PBO fiber, and aramid fiber, and wherein the blending ratio of the continuous reinforcing fibers (a1) in the composite spun yarn is 20 to 80% by mass.
(6) The composite spun yarn for fiber-reinforced thermoplastics according to (1), wherein each of the thermoplastic staple fibers constituting the sheath (B) and the thermoplastic staple fibers constituting the spun yarn (C) comprise at least one kind of thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether.
(7) The composite spun yarn for fiber-reinforced thermoplastics according to (3), wherein the thermoplastic staple fibers constituting the spun yarn (a2) comprise at least one kind of thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether.
(8) The composite spun yarn for fiber-reinforced thermoplastics according to (3), wherein the mass ratio of the spun yarn (a2) to the sum of the sheath (B) and the spun yarn (C) ((a2):(B)+(C)) is 70:30 to 30:70.
(9) The composite spun yarn for fiber-reinforced thermoplastics according to (4), wherein the thermoplastic staple fibers (a3) comprise at least one kind of thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether.
(10) The composite spun yarn for fiber-reinforced thermoplastics according to (4), wherein the mass ratio of the thermoplastic staple fibers (a3) to the sum of the sheath (B) and the spun yarn (C) ((a3):((B)+(C))) is 70:30 to 30:70.
(11) The composite spun yarn for fiber-reinforced thermoplastics according to any one of (1) to (10), wherein the composite spun yarn has a total fineness of 500 to 50,000 dtex.

Effects of the Invention

The composite spun yarn for fiber-reinforced thermoplastics of the present invention uses staple fibers for all of the thermoplastic fibers to be contained therein. Thanks to this feature, thermal shrinkage of the thermoplastic fibers is prevented even when heated to a temperature higher than the melting point of the thermoplastic resin constituting the thermoplastic fibers. Therefore, in fiber-reinforced plastic molded articles produced from the composite spun yarn of the present invention, no disturbance occurs in the orientation of the continuous reinforcing fibers. As a result, the resulting fiber-reinforced plastic molded article can exhibit uniformly increased strength.

Furthermore, in the composite spun yarn for fiber-reinforced thermoplastics of the present invention, thermoplastic staple fibers, which will act as a matrix resin when the composite spun yarn is made into a fiber-reinforced thermoplastic (FRTP), are directly arranged in both the inner and outer layers adjacent to the layer of continuous reinforcing fibers so as to form a fiber bundle with a double core-sheath structure, and a spun yarn made of thermoplastic staple fibers is further wound around and bound to the fiber bundle. Thanks to these features, it is possible to increase the contact area between the continuous reinforcing fibers and the surrounding thermoplastic staple fibers and reduce the distance between the layer of continuous reinforcing fibers and the layer of thermoplastic fibers. Therefore, when the composite spun yarn is heated to a temperature higher than the melting point of the thermoplastic resin constituting the thermoplastic fibers so as to melt the thermoplastic resin, the molten thermoplastic resin penetrates sufficiently quickly into the gaps between single fibers constituting the continuous reinforcing fibers, resulting in uniform integration of the continuous reinforcing fibers and the thermoplastic resin. As a result, it is possible to easily obtain fiber-reinforced thermoplastic plastic molded articles exhibiting good moldability, high strength, and uniform physical properties.

Furthermore, in the composite spun yarn for fiber-reinforced thermoplastics of the present invention, thermoplastic staple fibers, which will act as a matrix resin when the composite spun yarn is made into a fiber-reinforced thermoplastic (FRTP), are directly arranged in both the inner and outer layers adjacent to the layer of continuous reinforcing fibers so as to form a fiber bundle with a double core-sheath structure. Thanks to this feature, when the composite spun yarn of the present invention is heated to a temperature higher than the melting point of the thermoplastic resin constituting the thermoplastic fibers so as to melt the thermoplastic resin, the molten thermoplastic resin penetrates into the layer of continuous reinforcing fibers from two directions. Also, the continuous reinforcing fibers flow at the single fiber level in accordance with the penetration of the thermoplastic resin. As a result, it is possible to easily obtain fiber-reinforced thermoplastic plastic molded articles in which the continuous reinforcing fibers are uniformly dispersed.

Brief Description of the Drawings

FIG. 1 is a schematic perspective view of an example of the composite spun yarn for fiber-reinforced thermoplastics of the present invention.

FIG. 2 is a detailed schematic perspective view of an example of the composite spun yarn for fiber-reinforced thermoplastics of the present invention.

FIG. 3 is an example of a cross-sectional photograph of the composite spun yarn for fiber-reinforced thermoplastics of FIG. 2.

FIG. 4 is a schematic diagram of an example of an apparatus for producing the composite spun yarn for fiber-reinforced thermoplastics according to the present invention.

FIG. 5 is a photograph of a unidirectional molded article formed from the composite spun yarn of Example 5.

FIG. 6 is a photograph of a unidirectional molded article formed from the composite spun yarn of Comparative Example 1.

FIG. 7 is a cross-sectional photograph showing the state of impregnation of the thermoplastic resin in the composite spun yarn of Example 5.

FIG. 8 is a cross-sectional photograph showing the state of impregnation of the thermoplastic resin in the composite spun yarn of Example 4.

FIG. 9 is a cross-sectional photograph showing the state of impregnation of the thermoplastic resin in the composite spun yarn of Comparative Example 1.

Mode for Carrying Out the Invention

The composite spun yarn for fiber-reinforced thermoplastics of the present invention is characterized by a structure in which a spun yarn (C) made of thermoplastic staple fibers is wound around a fiber bundle having substantially no twist and having a core-sheath structure composed of a core (A) containing continuous reinforcing fibers (a1) and a sheath (B) made of thermoplastic staple fibers. In the composite spun yarn of the present invention, the core (A) containing the continuous reinforcing fibers (a1) is directly covered with the thermoplastic staple fibers (B). Accordingly, when the composite spun yarn is heated so as to melt the thermoplastic resin, the molten resin derived from the thermoplastic staple fibers easily penetrates into the gaps between single fibers constituting the continuous reinforcing fibers forming the core. Furthermore, by using staple fibers for all of the thermoplastic fibers to be contained in the composite spun yarn of the present invention, the thermal shrinkage of the spun yarn (C) is prevented even when the composite spun yarn is heated so as to melt the thermoplastic resin. As a result, the thermal shrinkage of the composite spun yarn is also prevented and the disturbance of the orientation of the continuous reinforcing fibers can be prevented. Specific mechanism is explained as follows. Thermoplastic fibers exhibit significant dimensional changes (shrinkage) upon heat treatment. In particular, the dimensional change of thermoplastic filament fibers is much greater than that of spun yarns. In the meantime, continuous reinforcing fibers do not shrink as much as thermoplastic fibers. Accordingly, if thermoplastic filament fibers are used as binder yarns and combined with continuous reinforcing fibers so as to form composite yarns, the difference in shrinkage behavior between the thermoplastic filament fibers and the continuous reinforcing fibers in the resulting composite yarns is significant. Accordingly, the thermal shrinkage of the thermoplastic filament fibers acting as binder yarns during heat treatment results in shrinkage of the composite yarn and disturbance of the orientation of the continuous reinforcing fibers in the fiber axial direction. On the contrary, the present invention uses staple fibers for all of the thermoplastic fibers to be contained in the composite spun yarn of the present invention. Accordingly, the above-mentioned shrinkage of the composite spun yarn can be prevented and thus the orientation of the continuous reinforcing fibers can be maintained.

The continuous reinforcing fibers (a1) used in the composite spun yarn of the present invention are reinforcing fibers that extends continuously in the longitudinal direction and are synonymous with "filament fibers for reinforcement". The continuous reinforcing fibers used in the composite spun yarn of the present invention are preferably high-strength fibers having a tensile strength of 1000 MPa or more and a tensile modulus of 30 GPa or more. Since such high-strength fibers are very difficult to bend, it is difficult to stably produce uniform spun yarns from such high-strength fibers by using conventional spinning methods. However, the composite spun yarn of the present invention can be produced without any problems. Examples of the continuous reinforcing fibers (a1) include carbon fiber, glass fiber, aramid fiber, polyparaphenylene benzobisoxazole fiber (PBO fiber), phenol fiber, metal fiber, aramid fiber, and ceramic fiber. In the present invention, it is preferable to use at least one fiber selected from the group consisting of carbon fiber, glass fiber, basalt fiber, PBO fiber, and aramid fiber. Carbon fiber, glass fiber, and aramid fiber are more preferred, and carbon fiber and glass fiber are even more preferred.

The blending ratio of the continuous reinforcing fibers (a1) in the composite spun yarn of the present invention is preferably 20 to 80% by mass, and more preferably 25 to 75% by mass. If the blending ratio of the continuous reinforcing fibers (a1) in the composite spun yarn is less than the above range, the strength-improving effect caused by the reinforcing fiber may decrease. If the blending ratio of the continuous reinforcing fibers (a1) in the composite spun yarn exceeds the above range, the coverage of the thermoplastic fiber may be too low, and voids may occur.

The single filament fineness (single fiber fineness) of the continuous reinforcing fibers (a1) is preferably 0.3 to 10 dtex, and more preferably 0.5 to 5 dtex. The total fineness of the continuous reinforcing fibers (a1) is preferably 500 to 50,000 dtex, and more preferably 650 to 40,000 dtex. The number of filaments of the continuous reinforcing fibers (a1) is preferably 700 to 70,000, and more preferably 900 to 60,000. When the continuous reinforcing fibers (a1) have a fineness within this range, it is easy to handle them as a reinforcing fiber for FRTP. Furthermore, it is preferable that the continuous reinforcing fibers (a1) have substantially no twist. Even if the continuous reinforcing fibers (a1) have some twist, the number of twists is preferably 10 times/inch or less, and more preferably 5 times/inch or less. If the number of twists exceeds the above range, the penetrability of the thermoplastic resin that will act as a matrix may decrease.

The strength of the continuous reinforcing fibers (a1) is preferably 1000 to 8000 MPa, and more preferably 2000 MPa or more. If the strength of the continuous reinforcing fibers (a1) is below the above range, it may be difficult for the molded FRTP to maintain sufficient strength. If the strength of the continuous reinforcing fibers (a1) exceeds the above range, it may be difficult to stably produce the composite spun yarn.

The thermoplastic staple fibers used in the composite spun yarn of the present invention are preferably made of a thermoplastic resin typically used as a matrix resin in FRTP and having a melting point lower than the decomposition temperature of the continuous reinforcing fibers. For example, when carbon fibers are used as the continuous reinforcing fibers, the thermoplastic staple fibers are preferably made of a resin having a melting point or glass transition temperature of 400°C or lower. The thermoplastic staple fibers are preferably made of at least one thermoplastic resin selected from the group consisting of polyamide, copolymerized polyamide, polypropylene, polyphenylene sulfide, polyetherimide, polyethersulfone, polyketone, polycarbonate, polysulfone, polyphenylene ether, polyimide, polyamideimide, polyaryletherketone, polyetheretherketone, and polyhydroxyether. In particular, the thermoplastic staple fibers preferably comprise at least one thermoplastic resin selected from the group consisting of polyamide, copolymerized polyamide, polypropylene, polyphenylene sulfide, polyetherimide, polycarbonate, polyetheretherketone, and polyimide.

The single filament fineness of the thermoplastic staple fibers is preferably 0.3 to 20 dtex, more preferably 0.5 to 15 dtex, and even more preferably 0.8 to 10 dtex. If the single filament fineness of the thermoplastic staple fibers is smaller than the above range, spinnability may decrease. If the single filament fineness of the thermoplastic staple fibers is larger than the above range, the resulting fiber bundle may be too stiff, leading to difficulty in stable production of the composite spun yarn. The fiber length of the thermoplastic staple fibers is preferably 25 to 70 mm, more preferably 30 to 60 mm, and even more preferably 32 to 55 mm. If the fiber length of the thermoplastic staple fibers is outside the above range, uniform spinning may be difficult.

The composite spun yarn of the present invention is in the form of a fiber bundle in which the continuous reinforcing fibers (a1) and the thermoplastic staple fibers are blended with each other substantially without any twist. The composite spun yarn of the present invention has a core-sheath structure in which a core (A) containing the continuous reinforcing fibers (a1) exists in the inside of the fiber bundle, seen in the cross section, and a sheath (B) made of a group of thermoplastic staple fibers exists in the outer periphery of the fiber bundle, seen in the cross section. In this core-sheath structure, the thermoplastic staple fibers always exist in the outer periphery of the fiber bundle, seen in the cross section. It should be noted that there is no need for the thermoplastic staple fibers to completely cover the continuous reinforcing fibers (a1) of the core (A). It is sufficient for the thermoplastic staple fibers to cover most of the continuous reinforcing fibers (a1) of the core (A).

By forming such fiber bundle having substantially no twist and having a core-sheath structure, the continuous reinforcing fibers (a1) are sufficiently covered with the thermoplastic staple fibers. Accordingly, when the thermoplastic staple fibers are melted by heating so as to form a matrix resin, the matrix resin can sufficiently and uniformly penetrate into the continuous reinforcing fibers, resulting in prevention of the occurrence of voids, and finally resulting in reduction in strength variation. In the present invention, the expression "have substantially no twist" means that the twist is so loose that the convergence of the fiber bundle cannot be maintained when the spun yarn (C) acting as the binder yarn is removed from the composite spun yarn. Specifically, whether a fiber bundle "has substantially no twist" or not is determined by the following procedure. Firstly, the composite spun yarn is attached to a twist detector and both ends of the composite spun yarn are grasped. Then, the spun yarn (C) acting as the binder yarn is removed from the composite spun yarn so as to leave only the fiber bundle. Then, the center of the fiber bundle is pinched with tweezers and stroked in the fiber axial direction. If the thermoplastic staple fibers in the sheath (B) slip out from the core (A) of the fiber bundle by the stroke, and the fiber bundle cannot be maintained, the original fiber bundle is deemed to "have substantially no twist".

The blending ratio of the continuous reinforcing fibers (a1) in the fiber bundle is preferably 20 to 80% by mass, and more preferably 25 to 75% by mass. If the blending ratio of the continuous reinforcing fibers is less than the above range, the strength-improving effect caused by the reinforcing fibers may decrease. If the blending ratio of the continuous reinforcing fibers exceeds the above range, the coverage of the thermoplastic fiber may be too low, and voids may occur.

In the composite spun yarn of the present invention, the core-sheath structure consists of a fiber bundle that has substantially no twist. This feature enables stable spinning. If the fiber bundle with the core-sheath structure has twist, the continuous reinforcing fibers are exposed to the surface of the composite spun yarn, resulting in a reduction in the coverage. In addition, twist back can occur in the composite spun yarn due to the rigidity of the continuous reinforcing fibers, making it difficult to stabilize spinning and to produce composite spun yarns with stable quality. In contrast, in the composite spun yarn of the present invention, the fiber bundle with a core-sheath structure has substantially no twist. Accordingly, the composite spun yarn of the present invention does not have the above-mentioned problems and thus enables stable spinning.

Regarding the configuration of the core (A) in the composite spun yarn of the present invention, a configuration composed only of the continuous reinforcing fibers (a1) is conceivable. In addition, it is preferable to adopt, for example, (i) a configuration composed of a spun yarn (a2) made of thermoplastic staple fibers and continuous reinforcing fibers (a1) arranged so as to cover the spun yarn (a2), or (ii) a configuration in which the continuous reinforcing fibers (a1) and thermoplastic staple fibers (a3) are mixed with each other. By adopting the configuration (i) or (ii), the thermoplastic fibers and the continuous reinforcing fibers are brought into close proximity with each other, resulting in increased contact area between the thermoplastic fibers and the continuous reinforcing fibers. Therefore, when the composite spun yarn is heated so as to melt the thermoplastic fibers, the molten thermoplastic resin penetrates into the layer of the continuous reinforcing fibers from two directions. In particular, the thermoplastic staple fibers arranged inside the layer of the continuous reinforcing fibers tend to pass through the layer of the continuous reinforcing fibers and to flow out to the outside. Therefore, the continuous reinforcing fibers disperse at the single fiber level in accordance with the dispersion and penetration of the thermoplastic resin, resulting in a uniform dispersion of the continuous reinforcing fibers in the resulting fiber-reinforced plastic molded article. In the case of the configuration (i), the spun yarn (a2) does not need to be completely arranged at the center of the core (A). It is sufficient that most of the spun yarn (a2) is covered with the continuous reinforcing fibers (a1). In the case of the configuration (ii), the continuous reinforcing fibers (a1) and the thermoplastic staple fibers (a3) do not need to be completely uniformly mixed with each other. It is sufficient that most of them are mixed with each other.

The thermoplastic staple fibers constituting the core (A) in the composite spun yarn of the present invention preferably comprise a thermoplastic resin typically used as a matrix resin in FRTP and having a melting point lower than the decomposition temperature of the continuous reinforcing fibers. For example, when carbon fibers are used as the continuous reinforcing fibers, the thermoplastic staple fibers preferably comprise a resin having a melting point or glass transition temperature lower than 400°C. The thermoplastic staple fibers constituting the core (A) preferably comprise at least one thermoplastic resin selected from the group consisting of polyamide, copolymerized polyamide, polypropylene, polyphenylene sulfide, polyetherimide, polyethersulfone, polyketone, polycarbonate, polysulfone, polyphenylene ether, polyimide, polyamideimide, polyaryletherketone, polyetheretherketone, and polyhydroxyether. In particular, the thermoplastic staple fibers constituting the core (A) preferably comprise at least one thermoplastic resin selected from the group consisting of polyamide, copolymerized polyamide, polypropylene, polyphenylene sulfide, polyetherimide, polycarbonate, polyetheretherketone, and polyimide. The thermoplastic staple fibers that may constitute a part of the core (A), the thermoplastic staple fibers that constitute the sheath (B), and the thermoplastic staple fibers that constitute the spun yarn (C) may comprise different kinds of thermoplastic resins from each other. However, when recycling FRTP, they preferably comprise the same kind of thermoplastic resin. Here, the shrinkage ratio of the spun yarn made of the thermoplastic staple fibers (a2) of the core (A) in the configuration (i) is preferably 3.5% or less, and more preferably 3% or less. If the shrinkage ratio exceeds the above range, the orientation of the continuous reinforcing fiber may be disturbed due to the influence of thermal shrinkage during heating and melting.

In the composite spun yarn of the present invention, when the above configuration (i) is used, the mass ratio of the thermoplastic staple fibers (the spun yarn) (a2) constituting the core (A) to the sum of the sheath (B) and the spun yarn (C) ((a2):((B)+(C))) is preferably 70:30 to 30:70, and more preferably 65:35 to 35:65. If the mass ratio of the thermoplastic staple fibers (a2) constituting the core (A) to the sum of the sheath (B) and the spun yarn (C) exceeds the above range, the coverage of the outer periphery of the fiber bundle seen in cross section by the thermoplastic staple fibers may be reduced, and voids may occur. If the mass ratio of the thermoplastic staple fibers (a2) constituting the core (A) to the sum of the sheath (B) and the spun yarn (C) is less than the above range, degree of resin outflow from the core may be reduced, and voids may occur.

In the composite spun yarn of the present invention, when the above configuration (ii) is used, the mass ratio of the thermoplastic staple fibers (a3) to the sum of the sheath (B) and the spun yarn (C) ((a3):((B)+(C))) is preferably 70:30 to 30:70, and more preferably 65:35 to 35:65. If the mass ratio of the thermoplastic staple fibers (a2) constituting the core (A) to the sheath (B) and the spun yarn (C) exceeds the above range, the coverage of the outer periphery of the fiber bundle seen in cross section by the thermoplastic staple fibers may be reduced, and voids may occur. If the mass ratio of the thermoplastic staple fibers (a2) constituting the core (A) to the sum of the sheath (B) and the spun yarn (C) is less than the above range, degree of resin outflow from the core may be reduced, and voids may occur.

Here, "impregnation" means replacing the air existing between and within fiber bundles by thermoplastic resin. A distance over which the resin needs to travel for this replacement is defined as an impregnation distance. In the present invention, a thickness direction distance (L1) of the thickest point of the layer of the continuous reinforcing fibers in the cross section of the composite spun yarn is measured using a measurement function, and half of this value (L1/2) is defined as the impregnation distance. The impregnation distance is preferably 200 $\mu$m or less, and more preferably 180 $\mu$m or less. If the impregnation distance exceeds this value, the distance between the continuous reinforcing fibers and the thermoplastic fibers in the cross section of the composite yarn may be too large, and voids may occur during heating and melting. When the impregnation distance is within the above range, the thermoplastic resin quickly penetrates into the continuous reinforcing fiber bundle in accordance with heating and melting of the thermoplastic staple fibers, making it easier to obtain a molded article with high physical properties. When the fineness of the continuous reinforcing fibers to be used is in the range of 500 to 2000 dtex, the above-mentioned impregnation distance can be realized even if the core (A) is composed only of the continuous reinforcing fibers (a1). When the fineness of the continuous reinforcing fibers to be used is in the range of more than 2000 dtex, it is preferable to use the configuration (i) or (ii) in which the continuous reinforcing fibers (a1) and the thermoplastic staple fibers (a2 or a3) are used in combination as the core (A), in order to realize the above-mentioned impregnation distance.

The fiber bundle of the composite spun yarn of the present invention has substantially no twist and therefore easily ravels (i.e. easily loses integrality and separates into parts). Therefore, in the present invention, a spun yarn (C) made of thermoplastic staple fibers is wound around the fiber bundle as a binder yarn (a yarn that binds the fiber bundle), thereby preventing the raveling of the fiber bundle. The staple fibers themselves shrink due to heating. However, the thermal shrinkage of the spun yarn is smaller than that of thermoplastic filament fibers. This is because the staple fibers are not physically continuous. As a result, by using the spun yarn (C) as the binder yarn, the continuous reinforcing fibers are less susceptible to the influence of the thermal shrinkage of the thermoplastic fibers. The shrinkage ratio of the spun yarn (C) to be used as the binder yarn is preferably 3.5% or less, and more preferably 3% or less. If the shrinkage ratio of the spun yarn (C) exceeds the above range, the orientation of the continuous reinforcing fibers may be disturbed due to the influence of the thermal shrinkage during heating and melting. This spun yarn (C) made of the thermoplastic staple fibers is preferably made of a thermoplastic resin typically used as a matrix resin for FRTP, and is preferably made from a resin having a melting point or glass transition temperature lower than the decomposition temperature of the continuous reinforcing fibers. For example, when carbon fibers are used as the continuous reinforcing fibers, the thermoplastic staple fibers constituting the spun yarn (C) are preferably thermoplastic fibers made of a resin having a melting point or glass transition temperature of lower than 400°C. The thermoplastic staple fibers constituting the spun yarn (C) are preferably staple fibers made of at least one thermoplastic resin selected from the group consisting of polyamide, copolymerized polyamide, polypropylene, polyphenylene sulfide, polyetherimide, polyethersulfone, polyketone, polycarbonate, polysulfone, polyphenylene ether, polyimide, polyamideimide, polyaryletherketone, polyetheretherketone, and polyhydroxyether. In particular, the thermoplastic staple fibers constituting the spun yarn (C) are preferably staple fibers comprising at least one thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether. The thermoplastic staple fibers constituting the spun yarn (C), the thermoplastic staple fibers constituting the sheath (B), and the thermoplastic staple fibers that may constitute a part of the core (A) may be made of different kinds of thermoplastic resins from each other. However, when recycling FRTP, it is preferable that they be made of the same type of thermoplastic resin.

The total fineness of the spun yarn (C) is preferably 10 to 1,000 dtex, and more preferably 50 to 800 dtex. If the total fineness of the spun yarn (C) is smaller than the above range, the binding of the composite spun yarn may be weak, leading to easy fuzzing, or the spun yarn may break due to friction, leading to yarn pull-out. If the total fineness of the spun yarn (C) is larger than the above range, the fiber bundle may twist when the fiber bundle containing the continuous reinforcing fibers (a1) and the thermoplastic staple fibers is bound with the spun yarn (C) made of the thermoplastic staple fibers, leading to difficulty in stable production. The single filament fineness of the thermoplastic staple fibers used in the spun yarn (C) is preferably 0.3 to 20 dtex, more preferably 0.5 to 15 dtex, and even more preferably 0.8 to 10 dtex. If the single filament fineness of the thermoplastic staple fibers used in the spun yarn (C) is smaller than the above range, spinnability may decrease. If the total fineness of the thermoplastic staple fibers used in the spun yarn (C) is larger than the above range, the resulting fiber bundle may be too stiff, leading to difficulty in stable production of the composite spun yarn. The fiber length of the thermoplastic staple fibers constituting the spun yarn (C) is preferably 25 to 70 mm, more preferably 30 to 60 mm, and even more preferably 32 to 55 mm. If the fiber length of the thermoplastic staple fibers is outside the above range, uniform spinning may be difficult.

The binding twist number of the spun yarn (C) is preferably 1 to 1000 T/m, more preferably 30 to 800 T/m, and even more preferably 50 to 500 T/m. If the binding twist number of the spun yarn (C) is below the above range, the binding strength may be weak and the fiber bundle may be easily pulled out. If the binding twist number of the spun yarn (C) exceeds the above range, the fiber bundle may be overly tightened, leading to difficulty in stable production of the composite spun yarn. The twist direction when winding the spun yarn (C) around the fiber bundle may be either the S direction or the Z direction.

The total fineness of the composite spun yarn of the present invention is preferably 500 to 50,000 dtex, more preferably 800 to 48,000 dtex, and even more preferably 1,000 to 45,000 dtex. If the total fineness of the composite spun yarn of the present invention is below the above range, it may be difficult to produce a uniform spun yarn. If the total fineness of the composite spun yarn of the present invention exceeds the above range, special equipment may be required to produce the composite spun yarn of the present invention, which may consequently increase production costs.

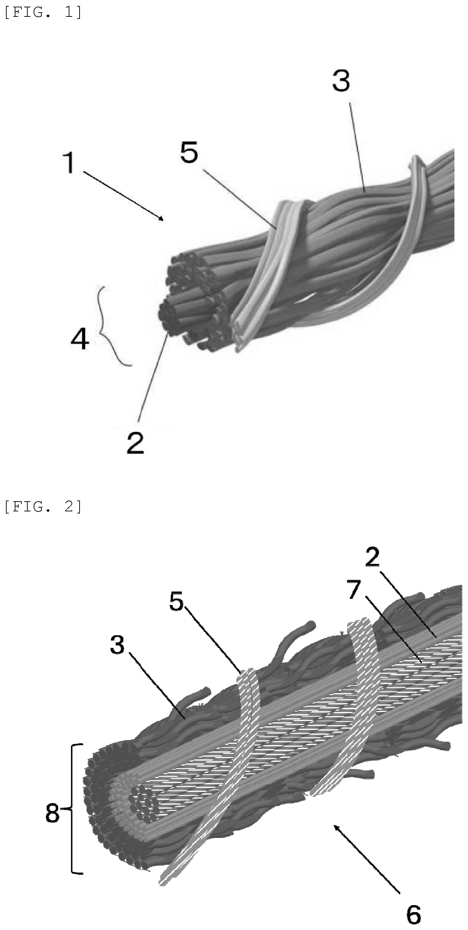

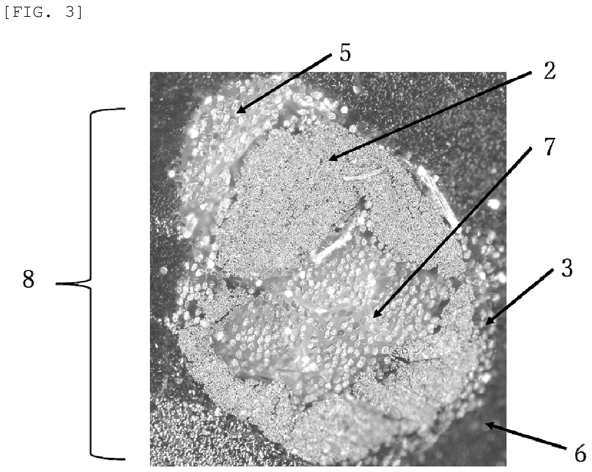

Next, the composite spun yarn of the present invention will be described with reference to the drawings. FIG. 1 is a perspective view of an example of the composite spun yarn of the present invention. As can be seen from FIG. 1, the composite spun yarn 1 of FIG. 1 has a structure in which a spun yarn 5 made of thermoplastic staple fibers is wound around a fiber bundle 4 with a core-sheath structure containing continuous reinforcing fibers 2 that form a core and thermoplastic staple fibers 3 that cover the continuous reinforcing fibers 2 and form the sheath. FIG. 1 shows an example in which the spun yarn 5 is wound around the fiber bundle 4 with an S twist. The thermoplastic staple fibers 3 and the spun yarn 5 will be melted by heating during the formation of FRTP and will become a matrix resin. FIG. 2 is a perspective view of an example of the composite spun yarn of the present invention in a different embodiment from that shown in FIG. 1. As can be seen from FIG. 2, a composite spun yarn 6 in FIG. 2 has a configuration in which a spun yarn 5 made of thermoplastic staple fibers is wound around a fiber bundle 8 with a double core-sheath structure formed from a core containing a spun yarn 7 made of thermoplastic staple fibers and continuous reinforcing fibers 2 arranged to cover the spun yarn 7, and a sheath made of thermoplastic staple fibers 3 arranged to cover the continuous reinforcing fibers 2 in the core. FIG. 3 is a cross-sectional photograph of an example of the composite spun yarn 6 shown in FIG. 2. In FIG. 3, reference number 2 refers to the continuous reinforcing fibers that form a part of the core, reference number 3 refers to the group of thermoplastic staple fibers that form the sheath, reference number 5 refers to the spun yarn made of thermoplastic staple fibers acting as the binder yarn, reference number 7 refers to the spun yarn made of thermoplastic staple fibers forming a part of the core, and reference number 8 refers to the fiber bundle with the double core-sheath structure. In FIG. 3, it is sufficient that the spun yarn 7 forming a part of the core is mostly covered by the continuous reinforcing fibers 2, and the spun yarn 7 does not have to be completely covered. It is also sufficient that the core is mostly covered by the group of thermoplastic staple fibers 3 forming the sheath, and the core does not have to be completely covered.

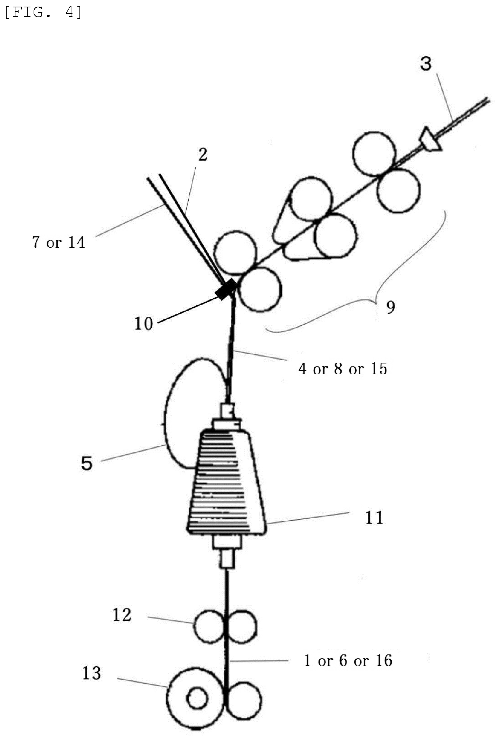

Next, an example of a method for producing the composite spun yarn of the present invention will be described with reference to FIG. 4. FIG. 4 is a schematic diagram of an example of an apparatus for producing the composite spun yarn of the present invention. As can be seen from FIG. 4, first, the continuous reinforcing fibers 2 are supplied as a core yarn. The thermoplastic staple fibers 3 that will form the sheath are drafted by a drafting device 9 and then supplied. Next, the continuous reinforcing fibers 2 of the core and the drafted thermoplastic staple fibers 3 are combined through a guide 10 so as to form a fiber bundle 4 with a core-sheath structure. This fiber bundle 4 has substantially no twist. Thereafter, a spun yarn 5 made of thermoplastic staple fibers drawn from a hollow bobbin 11 is wound around the fiber bundle 4, thereby the fiber bundle is bound so as to produce a composite spun yarn 1. The composite spun yarn 1 passes through a feed roller 12 and is wound onto a take-up package, thereby forming a cheese 13 of the composite spun yarn.

When the composite spun yarn of the present invention to be produced has the above-mentioned configuration (i), the continuous reinforcing fibers 2 and a spun yarn 7 made of thermoplastic staple fibers are supplied simultaneously. Next, the drafted thermoplastic staple fibers 3 are combined with the supplied continuous reinforcing fibers 2 and the spun yarn 7 through a guide 10 so as to form a fiber bundle 8 with a core-sheath structure. Here, by supplying the spun yarn 7 in such a manner that the spun yarn 7 is positioned in the center of the continuous reinforcing fibers 2 in the fiber width direction, a double core structure as shown in FIG. 3 is formed. Thereafter, a spun yarn 5 made of thermoplastic staple fibers drawn from a hollow bobbin 11 is wound around the fiber bundle 8, thereby the fiber bundle is bound so as to produce a composite spun yarn 6. The composite spun yarn 6 passes through a feed roller 12 and is wound onto a take-up package, thereby forming a cheese 13 of the composite spun yarn.

When the composite spun yarn of the present invention to be produced has the above-mentioned configuration (ii), the continuous reinforcing fibers 2 are passed through a roller so as to spread (open) the continuous reinforcing fibers 2. The thermoplastic staple fibers 14 are arranged at a width approximately equal to a width of the spread continuous reinforcing fibers 2 so that the thermoplastic staple fibers 14 overlap with the spread continuous reinforcing fibers 2, and the continuous reinforcing fibers 2 and the thermoplastic staple fibers 14 are supplied. Next, the drafted thermoplastic staple fibers 3 are combined with the supplied continuous reinforcing fibers 2 and the thermoplastic staple fibers 14 through a guide 10 so as to form a fiber bundle 15 with a core-sheath structure. This fiber bundle 15 has substantially no twist. The spread continuous reinforcing fibers 2 and the thermoplastic staple fibers 14 are then converged and blended with each other by a spun yarn 5 made of thermoplastic staple fibers and a take-up tension of a feed roller 12. Specifically, the spun yarn 5 drawn from a hollow bobbin 11 is wound around the fiber bundle 15, thereby the fiber bundle is bound so as to produce a composite spun yarn 16. The composite spun yarn 16 passes through the feed roller 12 and is wound onto a take-up package, thereby forming a cheese 13 of the composite spun yarn.

The strength of the core of the fiber bundle in the composite spun yarn of the present invention is preferably 500 to 8000 MPa, and more preferably 1300 to 7000 MPa. The strength of the core depends on the physical properties of the continuous reinforcing fibers. In the present invention, the continuous reinforcing fibers have substantially no twist and are converged, resulting in a yarn form in which the inherent strength of the continuous reinforcing fibers can be fully exhibited.

The composite spun yarn of the present invention may be formed into an FRTP by aligning the yarn itself using a roving method or the like, or may be formed into a woven fabric, knitted fabric, multi-axial warp-insertion knitted fabric, or braided fabric so as to act as an intermediate for fiber-reinforced resin. These intermediates can also be formed into prepregs for use in final molded articles. The aligned composite spun yarn, woven fabric, knitted fabric, and multi-axial warp-insertion knitted fabric can be molded into a sheet or tape for use. The braided fabric can be molded into a pipe for use. Any known weave or knit structure may be adopted for the woven or knitted fabrics.

Such a molded article can be produced by filling a mold with the composite spun yarn of the present invention, heating the mold to a temperature higher than the melting point of the thermoplastic staple fibers and the melting point of the spun yarn made of the thermoplastic staple fibers (or the glass transition temperature in the case of a resin which does not exhibit melting point), and melting the thermoplastic staple fibers. The heating temperature is preferably lower than the decomposition temperature of the continuous reinforcing fibers. Considering the penetrability of the thermoplastic resin into the continuous reinforcing fiber, it is preferable to heat and melt the thermoplastic staple fibers at a temperature higher than the melting point of the thermoplastic staple fibers for molding by 15°C to 300°C. For example, when polyamide 6 fibers are used as the thermoplastic staple fibers, the mold temperature is preferably about 220 to 300°C. The mold filling ratio is preferably 100 to 350%, and more preferably 105 to 200%.

The above-mentioned molded article can be produced by a conventionally known molding method, such as a hot stamping method, a prepreg molding method, an SMC molding method, etc. Alternatively, the molded article may be molded by a film stacking method in which a thermoplastic resin film is melted and compression-processed.

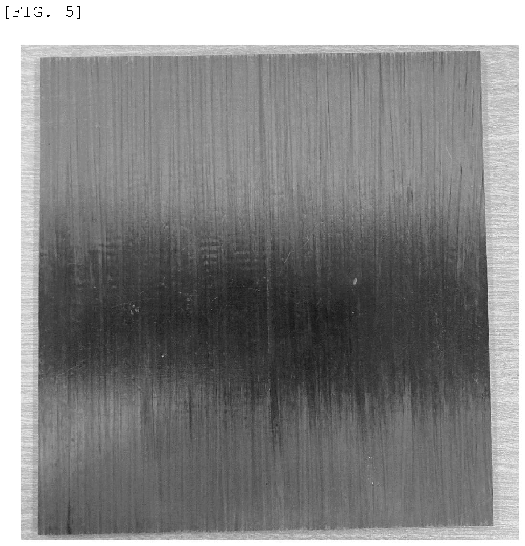

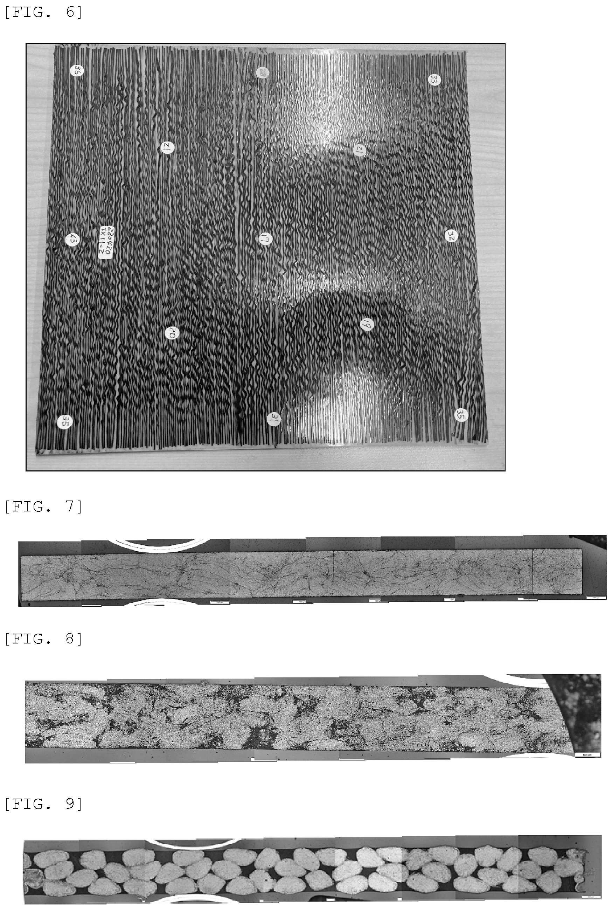

The composite spun yarn of the present invention can also be wound around a metal frame and hot-pressed so as to form a prepreg or molded article. FIG. 5 shows a photograph of a unidirectional molded article produced by winding the composite spun yarn of the present invention (Example 5) around a metal frame, filling it directly into a mold, and applying a pressing method. FIG. 6 shows a photograph of a unidirectional molded article produced by winding a composite yarn not belonging to the composite spun yarn of the present invention (Comparative Example 1), in which thermoplastic filament fibers are used as the binder yarn, wound around a metal frame, filled directly into a mold, and subjected to a pressing method.

The molded articles made with the composite spun yarn of the present invention can exhibit uniform and excellent appearance. That is, in the molded article prepared from the composite spun yarn of the present invention, there is no disturbance of the continuous reinforcing fibers in spite of the flow of the resin during molding, as shown in FIG. 5. On the other hand, in the molded article prepared from the composite yarn not belonging to the composite spun yarn of the present invention (Comparative Example 1), in which thermoplastic filament fibers are used as the binder yarn, the orientation of the continuous reinforcing fibers is disturbed due to the influence of shrinkage of the binder yarn when the binder yarn is heated and melted, as shown in FIG. 6. Conventional molded prepregs tend to exhibit a surface appearance of poor quality, with many irregularities caused by voids in areas into which the matrix resin did not sufficiently penetrate. On the contrary, in molded prepregs prepared from the composite spun yarn of the present invention, the matrix resin sufficiently and uniformly penetrates, and thus less voids may occur, thereby the prepreg can exhibit smooth surface appearance.

The molded article produced as described above from the composite spun yarn of the present invention can, in a preferred embodiment, achieve a tensile strength of 700 to 2000 MPa, or even 800 to 2000 MPa, a tensile modulus of 50 to 150 GPa, or even 70 to 150 GPa, a bending strength of 500 to 2000 MPa, or even 800 to 2000 MPa, and a bending modulus of 40 to 130 GPa, or even 70 to 150 GPa, in the case of a unidirectional molded article.

The molded article produced as described above from the composite spun yarn of the present invention has a small void ratio even if the molded article has a high fiber volume fraction (Vf). The void ratio is an index of the amount of voids. Specifically, the Vf of the molded article can be 30 to 70%, or even 44 to 70%, and the void ratio of the cross section of the woven fabric can be 1.0% or less, or even 0.8% or less, and furthermore, the occurrence of voids can be completely prevented.

Examples

The effects of the present invention will be specifically described below based on Examples, but the present invention is not limited to these. The methods for measuring the respective characteristic values in the present invention are as follows.

(1) Single yarn fineness of staple fibers

The single yarn fineness (single fiber fineness) was determined in accordance with JIS-L1015-8.5.1 Corrected Fineness Method A.

(2) Measurement of total fineness of spun yarn

The total fineness of each of the spun yarn (a2) of the core and the spun yarn (C) acting as the binder yarn was measured in accordance with JIS L 1095 9.4.2.

(3) Confirmation on whether fiber bundle has substantially no twist or not

The composite spun yarn was attached to a twist detector and both ends of the composite spun yarn were grasped. A needle was then inserted between the fiber bundle and the binder yarn (C). While the binder yarn (C) was untwisted to such extent that the binder yarn (C) loosened, only the binder yarn (C) was carefully removed using tweezers and scissors. The fiber bundle was then twisted by an amount corresponding to the amount of untwist. Then, the center of this fiber bundle was pinched with tweezers and stroked in the fiber axial direction. If the thermoplastic staple fibers moved from the fiber bundle in accordance with the movement of the tweezers, the fiber bundle was regarded as having substantially no twist. This indicates a state in which the fiber bundle cannot be maintained.

(4) Measurement of shrinkage ratio of spun yarn

The shrinkage ratio of each of the spun yarn (a2) of the core, the spun yarn (C) acting as the binder yarn, and the composite spun yarn was measured in accordance with JIS L 1013 8.18.2 a) (2010) dry-heat dimensional change ratio (%). The temperature of the dryer was set to 130°C.

(5) The number of twists of binder yarn wound around the fiber bundle

The number of twists was determined in accordance with JIS-L1095-9.15.1 Method A. Specifically, the composite spun yarn was attached to a twist detector. Then, a needle was inserted between the fiber bundle and the binder yarn (C) so as to untwist the binder yarn (C). The number of twists at which the fiber bundle and the binder yarn separated was taken as the number of binding twist.

(6) Measurement of the blending ratio of each raw material in composite spun yarn

The blending ratio of each raw material in the composite spun yarn was measured in accordance with JIS L1030-2 Test method for blending ratio of textile products - Part 2: Fiber blending ratio 4. Disentangling method.

(7) Fiber volume fraction of continuous reinforcing fibers in composite spun yarn (Vf')

The fiber volume fraction Vf' (%) of the continuous reinforcing fibers in the composite spun yarn was calculated using the following formula.

$$Vf'=(Tf/\rho f)/(Tf/\rho f+Tr/\rho r)\times 100$$

Tf: Fineness of continuous reinforcing fibers (dtex)
Tr: Fineness of thermoplastic fibers (staple fibers + spun yarn) (dtex)
$\rho f$: Specific gravity of continuous reinforcing fibers (g/cm$^3$)
$\rho r$: Specific gravity of thermoplastic fibers (staple fibers + spun yarn) (g/cm$^3$)

(8) Measurement of total fineness of composite spun yarn

The total fineness of the composite spun yarn was measured in accordance with JIS L 1095 9.4.2.

(9) Measurement of impregnation distance of composite spun yarn

A 10 mm diameter hole was drilled in a commercially available polypropylene plate (thickness: 3 mm). The composite spun yarn was wrapped in a colored fiber bundle, passed through the hole, and fixed. The composite spun yarn was then cut with a microtome so as to prepare an observation sample. The sample was photographed using a digital microscope VHX-7000. The magnification was set to 150x so that the entire cross section of the composite spun yarn could be observed. The thickness direction distance (L1) of the thickest point of the layer of the continuous reinforcing fibers was measured using the measurement function, and half of this value (L1/2) was defined as the impregnation distance.

(10) Fiber orientation of molded article

The orientation of the continuous reinforcing fibers was evaluated from the appearance of the produced unidirectionally molded article, and was judged as follows by comparing with FIGS. 5 and 6.

1: As shown in FIG. 6, the disturbance in the orientation of the continuous reinforcing fiber was observed.
2: As shown in FIG. 5, no disturbance in the orientation of the continuous reinforcing fibers was observed.

If the evaluation is 1, the molded article has poor physical properties. If the evaluation is 2, the molded article has excellent physical properties.

(11) Dispersibility of continuous reinforcing fibers

The cross section of the molded article in the thickness direction was observed as follows. A sample was prepared by cutting the molded article into 15 mm × 15 mm so that the cut edge was aligned with the direction of the continuous reinforcing fibers, and the sample was embedded in epoxy resin. The sample was polished until the cross section of the molded article in the thickness direction could be clearly observed. Images of the polished sample were obtained using a high-end inverted metallurgical microscope GX71 and a microscope digital camera DP73 (manufactured by Olympus). The images covering an area of 1.5 mm in the thickness direction of the molded article and 15 mm in the fiber alignment direction of the molded article were successively captured and stitched together so as to form a single continuous image. The dispersibility of the continuous reinforcing fibers was evaluated using the following index, according to the degree of dispersion of the continuous reinforcing fibers over the entire observation surface. In FIGS. 7 to 9, the white granular dots represent continuous reinforcing fibers, and the black areas represent thermoplastic resin.

1: As shown in FIG. 9, in the cross section of the molded article, traces of reinforcing fiber bundle were clearly observed and resin-rich areas were observed.
2: As shown in FIG. 8, in the cross section of the molded article, no traces of reinforcing fiber bundle were observed but resin-rich areas were observed.
3: As shown in FIG. 7, in the cross section of the molded article, no traces of reinforcing fiber bundle were observed and no resin-rich areas were observed.

If the evaluation result is 1, the molded article has poor physical properties. If the evaluation result is 2, the molded article exhibits excellent physical properties. If the evaluation result is 3, the molded article exhibits more excellent physical properties.

(12) Fiber volume fraction (Vf) of continuous reinforcing fibers in molded article

First, the weight fraction (Wf) of the continuous reinforcing fibers in the molded article was measured with reference to JIS K 7052. Specifically, a washed and dried porcelain crucible was accurately weighed using an electronic balance with an accuracy of 0.1 mg (this weight was defined as M1). A 1.5 mm thick, 150 mm square test piece was cut from arbitrary position of the molded article, placed in the porcelain crucible, and dried in a dryer at 105°C until the mass became constant. It was then cooled in a desiccator and accurately weighed using the electronic balance with an accuracy of 0.1 mg (this weight was defined as M2). This was heated in an electric furnace at an atmosphere temperature of 420°C for 8 hours. The porcelain crucible and ash residue after ashing were transferred to the desiccator, cooled to room temperature, and weighed with an accuracy of 0.1 mg (this weight was defined as M3). Using these values, the weight fraction (Wf) of the continuous reinforcing fibers was calculated using the following formula:

$$\mathtt{Wf=(M3-M1)/(M2-M1)\times100}$$

Wf: Weight fraction of continuous reinforcing fibers in molded article (%)
M1: Dry mass of porcelain crucible (g)
M2: Mass of porcelain crucible and test piece before ashing (g)
M3: Mass of porcelain crucible and test piece after ashing (g)

Next, using the weight fraction (Wf) of the continuous reinforcing fibers obtained above, the fiber volume fraction (Vf) of the continuous reinforcing fibers in the molded article was calculated according to the following formula.

$$\mathtt{Vf=Wf/\rho f/(Wf/\rho f+(1-Wf)/\rho r)\times100}$$

(13) Void ratio of molded article (Vv)

The cross section of the molded article in the thickness direction was observed as follows. A sample was prepared by cutting the molded article into 15 mm × 15 mm pieces so that the cut edges were aligned with the direction of the continuous reinforcing fibers, and the sample was embedded in epoxy resin. The sample was polished until the cross section of the molded article in the thickness direction could be clearly observed. An image of the polished sample was obtained using a digital microscope VHX-7000. The image was captured at a magnification of 300x. In the captured image, the area of the entire observation surface and the area of the portions corresponding to voids were determined. The void ratio was calculated using the following formula. The average of the calculated values for five locations was used as the void ratio.

Void ratio (%) = 100 × (total area of the portion occupied by voids)/ (total area of the observation surface)

(14) Bending strength and bending modulus of molded article

The bending strength and bending modulus were measured in accordance with the test piece dimensions and test method specified in JIS-K7074.

(i) Preparation of test piece

A test piece having a length of 100 mm and a width of 15 mm was cut out from the obtained molded article in a direction parallel to the fiber direction (0°).

(ii) Measurement of bending strength and bending modulus

Using the cut-out test piece, a three-point bending test was conducted at a speed of 5 mm/min with a support distance of 80 mm under an environment of 23°C and 50% humidity so as to measure strength and elastic modulus. The tester used was an "Autograph AG-X plus 100 kN" manufactured by Shimadzu Corporation. The average values of the three measurements were defined as the bending strength and bending elastic modulus.

(15) Tensile strength and tensile modulus of molded article

The tensile strength and tensile modulus were measured in accordance with the test piece dimensions and test method specified in JIS-K7165.

(i) Preparation of test piece

A test piece having a length of 200 mm and a width of 1.25 mm was cut from the obtained molded article in a direction parallel to the fiber direction (0°). Both ends of the test piece were reinforced with tabs. The tabs were made of a composite material of glass fiber woven fabric and epoxy resin, and the tab size was 50 mm in length and 1.25 mm in width. CN adhesive (general-purpose) manufactured by Tokyo Measuring Instruments Laboratory Co., Ltd. was used as the adhesive for the tabs. After the tabs were adhered to the test piece, it was left to stand overnight in an environment of 23°C and 50% humidity.

(ii) Measurement of tensile strength and tensile modulus

Using the test piece prepared above, a tensile test was conducted at a speed of 2 mm/min with a gripping distance of 100 mm under an environment of 23°C and 50% humidity so as to measure the tensile strength and tensile modulus. The tester used was an "Autograph AG-X plus 100kN" manufactured by Shimadzu Corporation. A KFRPB-5-120-C1-3 L3M2 R strain gauge manufactured by Kyowa Electronic Instruments Co., Ltd. was attached. The average values of the three measurements were defined as the tensile strength and tensile modulus.

(Example 1)

The raw material fibers for producing the composite spun yarn were prepared as follows.

(Continuous reinforcing fibers)

As to the continuous reinforcing fibers (a1), PAN-based carbon fibers manufactured by Toray Industries, Inc. ("TORAYCA T700SC-12000"; total fineness 8000 dtex, 12000 filaments, single filament fineness 0.66 dtex, tensile strength 4900 MPa, density 1.80 g/cm$^3$) were used. The decomposition temperature of the continuous reinforcing fibers is higher than 500°C in an oxygen atmosphere.

(Production of thermoplastic staple fibers and spun yarn)

Polyamide 6 polymer (PA6) was spun into filament fibers of 1100 dtex/500 filament (single filament fineness 2.2 dtex, density 1.13 g/cm$^3$). A large number of these filament fibers were collected and cut to a length of 51 mm using a guillotine cutter so as to obtain staple fibers. The resulting polyamide 6 staple fibers (100%) were blended with each other and opened using a cotton blending machine manufactured by Ohara Iron Works. Thereafter, the fibers were converted into a card sliver using a carding machine manufactured by Howa Machinery, Ltd. The card silver was passed through a drawing machine manufactured by Hara-Oriki Seisakusho so as to obtain a sliver of 371.2 grain/6 yd. Subsequently, the silver was drafted at a ratio of 7.9 using a roving machine manufactured by Toyota Industries Corporation, and then spun into a thermoplastic staple fiber roving of 124 grain/15 yd. This roving was used as the thermoplastic staple fibers forming the sheath (B). The roving was further drafted at a ratio of 24.9 using a spinning machine manufactured by Toyota Industries Corporation, and spun into a 30/1 spun yarn (C) acting as the binder yarn. The melting point of the thermoplastic staple fibers was 225°C.

(Production of composite spun yarn)

A composite spun yarn having a total fineness of 12,943 dtex was produced using a Trispin spinning machine (ON-2000H) manufactured by Ozeki Noboru Shoten Co., Ltd. Specifically, the above-mentioned continuous reinforcing fibers were supplied as the core yarn 2 in FIG. 4, and six thermoplastic staple fiber rovings prepared as above were supplied as the sheath yarn 3. The above-mentioned thermoplastic staple fiber rovings 3 were drafted at a ratio of 6.2 using a draft device 9 and overlapped with the continuous reinforcing fibers 2 so as to form a core-sheath fiber bundle 4 having substantially no twist. Subsequently, the above-mentioned spun yarn acting as the binder yarn 5 was wound around the core-sheath fiber bundle 4 with an S-twist at a spindle rotation speed of 1,420 rpm on a bobbin 8 so as to bind the fiber bundle, producing the composite spun yarn 1, which was then wound around a cheese 13. Details and evaluation results of the obtained composite spun yarn are shown in Table 1.

(Production of unidirectionally molded article)

Using a wrap reel winder, the produced composite yarn was wound around a metal frame of 400 mm in length and 220 mm in width at a winding pitch of 1.5 mm to a width of 150 mm. This was then subjected to heat compression molding using a press molding machine manufactured by Asano Co., Ltd. at a mold temperature of 265°C and a pressure of 3 MPa for 10 minutes so as to produce one unidirectionally molded article. Details and evaluation results of this molded article are shown in Table 1.

(Example 2)

As to the continuous reinforcing fibers (a1), PAN-based carbon fiber manufactured by Toray Industries, Inc. ("TORAYCA T300B-1000"; total fineness 660 dtex, 1000 filaments, single filament fineness 0.66 dtex, tensile strength 3530 MPa, density 1.78 g/cm$^3$) was used. The decomposition temperature of the continuous reinforcing fibers is higher than 500°C in an oxygen atmosphere. The sheath (B) and the spun yarn (C) acting as the binder yarn used in Example 2 were the same as in Example 1. The same apparatus as in Example 1 was used so as to produce a composite spun yarn in the same manner as in Example 1, except for the followings. That is, in Example 1, six rovings were used and drafted at a ratio of 6.2 when the thermoplastic staple fiber rovings were overlapped with the continuous reinforcing fibers. In contrast, in Example 2, one roving was used and overlapped with the continuous reinforcing fiber bundle and then drafted at a ratio of 21.3, thereby a composite spun yarn having a total fineness of 1084 dtex was produced. Details and evaluation results of the obtained composite spun yarn are shown in Table 1.
From this composite spun yarn, one unidirectionally molded article was prepared using the same apparatus as in Example 1. Details and evaluation results of this molded article are shown in Table 1.

(Example 3)

The continuous reinforcing fibers (a1), the sheath (B), and the spun yarn (C) acting as the binder yarn used in Example 3 were the same as those in Example 1. The spun yarn (a2) constituting a part of the core (A) was newly produced. Specifically, two 124 grain/15 yd rovings described in Example 1 were drafted at a ratio of 16.6, and spun into a 10/1 spun yarn (a2). The same apparatus as in Example 1 was used so as to produce a composite spun yarn in the same manner as in Example 1, except for the followings. That is, in Example 3, four 10/1 spun yarns (a2) were arranged so as to be positioned inside the layer of continuous reinforcing fibers (a1). The mass ratio of the spun yarn (a2) constituting a part of the core (A) to the sum of the sheath (B) and the spun yarn (C) was set to (a2): ((B)+(C))=47:53. In Example 1, six rovings were used and drafted at a ratio of 6.2 when the thermoplastic staple fiber rovings were overlapped with the continuous reinforcing fibers. In contrast, in Example 3, four rovings were used and overlapped with the continuous reinforcing fiber bundle and then drafted at a ratio of 8.3, thereby a composite spun yarn having a total fineness of 12,978 dtex was produced. Details and evaluation results of the obtained composite spun yarn are shown in Table 1.
From this composite spun yarn, one unidirectionally molded article was prepared using the same apparatus as in Example 1. Details and evaluation results of this molded article are shown in Table 1.

(Example 4)

As to the continuous reinforcing fibers (a1), PAN-based carbon fiber manufactured by Toray Industries, Inc. ("TORAYCA T700SC-6000"; total fineness 4000 dtex, 6000 filaments, single filament fineness 0.66 dtex, tensile strength 4900 MPa, density 1.80 g/cm$^3$) was used. The decomposition temperature of this continuous reinforcing fiber is higher than 500°C in an oxygen atmosphere. The sheath (B), the spun yarn (C) acting as the binder yarn, and the spun yarn (a2) constituting a part of the core (A) used in Example 4 were the same as those in Example 3. The same apparatus as in Example 1 was used so as to produce a composite spun yarn in the same manner as in Example 3, except for the followings. That is, two 10/1 spun yarns were arranged so as to be positioned inside the layer of continuous reinforcing fiber. The mass ratio of the spun yarn (a2) constituting a part of the core (A) to the sum of the sheath (B) and the spun yarn (C) was set to (a2): ((B)+(C))=47:53. In Example 3, four rovings were used and drafted at a ratio of 8.3 when the thermoplastic staple fiber rovings were overlapped with the continuous reinforcing fibers. In contract, in Example 4, two rovings were used and overlapped with the continuous reinforcing fiber bundle and then drafted at a ratio of 8.7, thereby a composite spun yarn having a total fineness of 6511 dtex was produced. Details and evaluation results of the obtained composite spun yarn are shown in Table 1.
From this composite spun yarn, one unidirectionally molded article was prepared using the same apparatus as in Example 1. Details and evaluation results of this molded article are shown in Table 1. Impregnation state of the thermoplastic resin in the composite spun yarn is shown in the cross-sectional photograph of FIG. 8.

(Example 5)

The continuous reinforcing fibers (a1) used in Example 5 were the same as in Example 1. In order to prepare the thermoplastic staple fibers, polypropylene polymer (PP) was spun into filament fibers of 1100 dtex/500 filament (single filament fineness 2.2 dtex, density 0.91 g/cm$^3$). A large number of these filament fibers were collected and cut to a length of 51 mm using a guillotine cutter so as to obtain staple fibers. The resulting polypropylene staple fibers (100%) were blended with each other and opened using a cotton blending machine manufactured by Ohara Iron Works. Thereafter, the fibers were converted into a card sliver using a carding machine manufactured by Howa Machinery, Ltd. The silver was passed through a drawing machine manufactured by Hara-Oriki Seisakusho so as to obtain a sliver of 370.0 grains/6 yds. Subsequently, the silver was drafted at a ratio of 7.7 using a roving machine manufactured by Toyota Industries Corporation, and then spun into a thermoplastic staple fiber roving of 120 grain/15 yd. This roving was used as the thermoplastic staple fibers forming the sheath (B). The above-mentioned roving was further drafted at a ratio of 16.1 using a spinning machine manufactured by Toyota Industries Corporation, and then spun into a 20/1 spun yarn forming the spun yarn (C) acting as the binder yarn and the spun yarn (a2) constituting a part of the core (A). The melting point of this thermoplastic staple fiber was 168°C. The same apparatus as in Example 1 was used so as to produce a composite spun yarn in the same manner as in Example 3, except for the followings. That is, six 20/1 spun yarns were arranged so as to be positioned inside the layer of continuous reinforcing fibers. The mass ratio of the spun yarn (a2) constituting a part of the core (A) to the sum of the sheath (B) and the spun yarn (C) was set to (a2):((B)+(C))=44:56. In Example 3, four rovings were drafted at a ratio of 8.3 when the thermoplastic staple fiber rovings were overlapped with the continuous reinforcing fibers. In contract, in Example 5, four rovings were overlapped with the continuous reinforcing fiber bundle and then drafted at a ratio of 9.3, thereby a composite spun yarn having a total fineness of 12,000 dtex was produced. Details and evaluation results of the obtained composite spun yarn are shown in Table 1.

From this composite spun yarn, one unidirectionally molded article was prepared using the same apparatus as in Example 1. Details and evaluation results of this molded article are shown in Table 1. Impregnation state of the thermoplastic resin in the composite spun yarn is shown in the cross-sectional photograph of FIG. 7.

(Example 6)

The continuous reinforcing fibers (a1) used in Example 6 were the same as in Example 1. In order to prepare the thermoplastic staple fibers, polycarbonate polymer (PC) was spun into filament fibers of 1540 dtex/200 filament (single filament fineness 7.7 dtex, density 1.2 g/cm$^3$). A large number of these filament fibers were collected and cut to a length of 51 mm using a guillotine cutter so as to obtain staple fibers. The resulting polycarbonate staple fibers (100%) were blended with each other and opened using a cotton blending machine manufactured by Ohara Iron Works. Thereafter, the fibers were converted into a card sliver using a carding machine manufactured by Howa Machinery, Ltd. The silver was passed through a drawing machine manufactured by Hara-Oriki Seisakusho so as to obtain a silver of 375 grain/6 yd. Subsequently, the silver was drafted at a ratio of 7.8 using a roving machine manufactured by Toyota Industries Corporation, and then spun into a thermoplastic staple fiber roving of 120 grain/15 yd. This roving was used as the thermoplastic staple fibers forming the sheath (B). Furthermore, two rovings prepared as above were drafted at a ratio of 16.0 using a spinning machine manufactured by Toyota Industries Corporation, and then spun into a 10/1 spun yarn forming the spun yarn (C) acting as the binder yarn and the spun yarn (a2) constituting a part of the core (A). The glass transition temperature of the thermoplastic staple fibers was 149°C. The same apparatus as in Example 1 was used so as to produce a composite spun yarn in the same manner as in Example 3, except for the followings. That is, four 10/1 spun yarns were arranged so as to be positioned inside the layer of continuous reinforcing fiber. The mass ratio of the spun yarn (a2) constituting a part of the core (A) to the sum of the sheath (B) and the spun yarn (C) was set to (a2):((B)+(C))=44:56. In Example 3, four rovings were drafted at a ratio of 8.3 when the thermoplastic staple fiber rovings were overlapped with the continuous reinforcing fibers. In contrast, in Example 6, four rovings were overlapped with the continuous reinforcing fiber bundle and then drafted at a ratio of 8.0, thereby a composite spun yarn having a total fineness of 13,333 dtex was produced. Details and evaluation results of the obtained composite spun yarn are shown in Table 1.

From this composite spun yarn, one unidirectionally molded article was prepared using the same apparatus as in Example 1. Details and evaluation results of this molded article are shown in Table 1.

(Example 7)

The continuous reinforcing fibers (a1) used in Example 7 were the same as in Example 1. In order to prepare the thermoplastic staple fibers, polyphenylene sulfide polymer (PPS) was spun into filament fibers of 1100 dtex/500 filament (single filament fineness 2.2 dtex, density 1.35 g/cm$^3$). A large number of these filament fibers were collected and cut to a length of 51 mm using a guillotine cutter so as to obtain staple fibers. The polyphenylene sulfide staple fibers (100%) were blended with each other and opened using a cotton blending machine manufactured by Ohara Iron Works. Thereafter, the fibers were converted into a card sliver using a carding machine manufactured by Howa Machinery, Ltd. The silver was passed through a drawing machine manufactured by Hara-Oriki Seisakusho so as to obtain a sliver of 371 grain/6 yd. Subsequently, the silver was drafted at a ratio of 7.4 using a roving machine manufactured by Toyota Industries Corporation, and then spun into a thermoplastic staple fiber roving of 125 grain/15 yd. This roving was used as the thermoplastic staple fibers forming the sheath (B). Furthermore, two rovings prepared as above were drafted at a ratio of 33.4 using a spinning machine manufactured by Toyota Industries Corporation, and then spun into a 20/1 spun yarn forming the spun yarn (C) acting as the binder yarn and the spun yarn (a2) constituting a part of the core (A). The melting point of these thermoplastic staple fibers was 277°C. The same apparatus as in Example 1 was used so as to produce composite spun yarn in the same manner as in Example 3, except for the followings. That is, nine 20/1 spun yarns were arranged so as to be positioned inside the layer of continuous reinforcing fibers. The mass ratio of the spun yarn (a2) constituting a part of the core (A) to the sum of the sheath (B) and the spun yarn (C) was set to (a2):((B)+(C))=44:56. In Example 3, four rovings were drafted at a ratio of 8.3 when the thermoplastic staple fiber rovings were overlapped with the continuous reinforcing fibers. In contrast, in Example 7, four rovings were overlapped with the continuous reinforcing fiber bundle and then drafted at a ratio of 6.4, thereby a composite spun yarn having a total fineness of 14,000 dtex was produced. Details and evaluation results of the obtained composite spun yarn are shown in Table 1.

From this composite spun yarn, one unidirectionally molded article was prepared using the same apparatus as in Example 1. Details and evaluation results of this molded article are shown in Table 1.

(Example 8)

The continuous reinforcing fibers (a1) used in Example 8 were the same as in Example 1. In order to prepare the thermoplastic staple fibers, polyimide polymer (PI) was spun into filament fibers of 1100 dtex/500 filament (single filament fineness 2.2 dtex, density 1.4 g/cm$^3$). A large number of these filament fibers were collected and cut to a length of 51 mm using a guillotine cutter so as to obtain staple fibers. The polyimide staple fibers (100%) were blended with each other and opened using a cotton blending machine manufactured by Ohara Iron Works. Thereafter, the fibers were converted into a card sliver using a carding machine manufactured by Howa Machinery, Ltd. The silver was passed through a drawing machine manufactured by Hara-Oriki Seisakusho so as to obtain a sliver of 369.0 grains/6 yds. Subsequently, the silver was drafted at a ratio of 7.4 using a roving machine manufactured by Toyota Industries Corporation, and then spun into a thermoplastic staple fiber roving of 125 grain/15 yd. This roving was used as the thermoplastic staple fibers forming the sheath (B). Furthermore, two rovings prepared as above were drafted at a ratio of 33.4 using a spinning machine manufactured by Toyota Industries Corporation, and then spun into a 20/1 spun yarn forming the spun yarn (C) acting as a binder yarn and the spun yarn (a2) constituting a part of the core (A). The melting point of these thermoplastic staple fibers was 277°C. A composite spun yarn was produced in the same manner as in Example 3 using the same apparatus as in Example 1, except for the followings. That is, nine 20/1 spun yarns were arranged so as to be positioned inside the layer of continuous reinforcing fibers. The mass ratio of the spun yarn (a2) constituting a part of the core (A) to the sum of the sheath (B) and the spun yarn (C) was set to (a2):((B)+(C))=43:57. In Example 3, four rovings were drafted at a ratio of 8.3 when the thermoplastic staple fiber rovings were overlapped with the continuous reinforcing fibers. In contrast, in Example 8, four rovings were overlapped with the continuous reinforcing fiber bundle and then drafted at a ratio of 6.1, thereby a composite spun yarn having a total fineness of 14,198 dtex was produced. Details and evaluation results of the obtained composite spun yarn are shown in Table 1.

From this composite spun yarn, one unidirectionally molded article was prepared using the same apparatus as in Example 1. Details and evaluation results of this molded article are shown in Table 1.

(Example 9)

The continuous reinforcing fibers (a1), the sheath (B), the spun yarn (C) acting as a binder yarn, and the spun yarn (a2) constituting a part of the core (A) used in Example 9 were the same as in Example 6. The same apparatus as in Example 1 was used so as to produce a composite spun yarn in the same manner as in Example 3, except for the followings. That is, six 10/1 spun yarns were arranged so as to be positioned inside the continuous reinforcing fibers. The mass ratio of the spun yarn (a2) inside the layer of continuous reinforcing fibers forming the core to the sum of the sheath (B) and the spun yarn (C) was set to (a2): ((B)+(C))=67:33. In Example 3, four rovings were used and drafted at a ratio of 8.3 when the thermoplastic staple fiber rovings were overlapped with the continuous reinforcing fibers. In contrast, in Example 9, two rovings were used and overlapped with the continuous reinforcing fiber bundle and then drafted at a ratio of 7.9, thereby a composite spun yarn having a total fineness of 13,333 dtex was produced. Details and evaluation results of the obtained composite spun yarn are shown in Table 1.

From this composite spun yarn, one unidirectionally molded article was prepared using the same apparatus as in Example 1. Details and evaluation results of this molded article are shown in Table 1.

(Example 10)

As to the continuous reinforcing fibers (a1), PAN-based carbon fiber manufactured by Toray Industries, Inc. ("TORAYCA T700SC-24000"; total fineness 16,500 dtex, 24,000 filaments, single filament fineness 0.66 dtex, tensile strength 4,900 MPa, density 1.80 g/cm$^3$) was used. The decomposition temperature of the continuous reinforcing fibers is higher than 500°C in an oxygen atmosphere. The sheath (B), the spun yarn (C) acting as the binder yarn, and the spun yarn (a2) constituting a part of the core (A) used in Example 10 were the same as in Example 6. The same apparatus as in Example 1 was used so as to produce a composite spun yarn in the same manner as in Example 3, except for the followings. That is, twenty 10/1 spun yarns were arranged so as to be positioned inside the layer of continuous reinforcing fibers. The mass ratio of the spun yarn (a2) constituting a part of the core (A) to the sum of the sheath (B) and the spun yarn (C) was set to a2:(B+C)=46:54. In Example 3, four rovings were used and drafted at a ratio of 8.3 when the thermoplastic staple fiber rovings were overlapped with the continuous reinforcing fibers. In contrast, in Example 10, ten rovings were used and overlapped with the continuous reinforcing fiber bundle and then drafted at a ratio of 3.7, thereby a composite spun yarn having a total fineness of 42,167 dtex was produced. Details and evaluation results of the obtained composite spun yarn are shown in Table 1.
From this composite spun yarn, one unidirectionally molded article was prepared using the same apparatus as in Example 1. Details and evaluation results of this molded article are shown in Table 1.

(Example 11)

As to the continuous reinforcing fibers (a1), a glass roving manufactured by Nippon Sheet Glass Co., Ltd. was used. This glass roving is a high-strength and high-modulus glass fiber "RMR060X-RW370K-C" (total fineness 6,000 dtex, 1,750 filaments, fiber diameter 13 μm, tensile strength 4,300 MPa, density 2.58 g/cm$^3$). The decomposition temperature of the continuous reinforcing fibers is higher than 500°C in an oxygen atmosphere. The sheath (B), the spun yarn (C) acting as the binder yarn, and the spun yarn (a2) constituting a part of the core (A) used in Example 11 were the same as in Example 5. The same apparatus as in Example 1 was used so as to produce a composite spun yarn in the same manner as in Example 3, except for the followings. That is, three 20/1 spun yarns were arranged so as to be positioned inside the layer of continuous reinforcing fibers. The mass ratio of the spun yarn (a2) constituting a part of the core (A) to the sum of the sheath (B) and the spun yarn (C) was set to (a2):((B)+(C))=42:58. In Example 3, four rovings were used and drafted at a ratio of 8.3 when the thermoplastic staple fiber rovings were overlapped with the continuous reinforcing fibers. In contrast, in Example 11, two rovings were used and overlapped with the continuous reinforcing fiber bundle and then drafted at a ratio of 10.4, thereby a composite spun yarn having a total fineness of 8093 dtex was produced. Details and evaluation results of the obtained composite spun yarn are shown in Table 1.
From this composite spun yarn, one unidirectionally molded article was prepared using the same apparatus as in Example 1. Details and evaluation results of this molded article are shown in Table 1.

(Example 12)

The continuous reinforcing fibers (a1), the sheath (B), and the spun yarn (C) acting as the binder yarn used in Example 12 were the same as in Example 1. The sliver of 371.2 grain/6 yd described in Example 1 was drafted at a ratio of 11.6 using a roving machine manufactured by Toyota Industries Corporation and then spun into a roving of 80 grain/15 yd. This roving was used as the group of thermoplastic staple fibers (a3) to be blended with the continuous reinforcing fibers. The same apparatus as in Example 1 was used so as to produce a composite spun yarn in the same manner as in Example 3, except for the followings. That is, the continuous reinforcing fibers were passed four times over a roller having a diameter of 1 cm and then combined with the group of thermoplastic staple fibers (a3), whereby the fibers were converged under the tension during spinning and the core fibers became blended. The mass ratio of the group of thermoplastic staple fibers (a3) blended with the continuous reinforcing fibers to the sum of the sheath (B) and spun yarn (C) was set to (a3):((B)+(C)) =42:58. In Example 3, four rovings were used and drafted at a ratio of 8.3 when the thermoplastic staple fiber rovings were overlapped with the continuous reinforcing fibers. In contrast, in Example 12, six rovings were used and overlapped with the continuous reinforcing fiber bundle and then drafted at a ratio of 6.8, thereby a composite spun yarn having a total fineness of 15,533 dtex was produced. Details and evaluation results of the obtained composite spun yarn are shown in Table 1.
From this composite spun yarn, one unidirectionally molded article was prepared using the same apparatus as in Example 1. Details and evaluation results of this molded article are shown in Table 1.

(Comparative Example 1)

Comparative Example 1 is an example in which thermoplastic filament fibers are used as the binder yarn.

The continuous reinforcing fibers (a1) and the sheath (B) used in Comparative Example 1 were the same as those in Example 1. As to the thermoplastic filament fibers, a commercially available semi-dull polyamide 6 (PA6) filament fiber (raw yarn) of 222 dtex and 24 filaments (single filament fineness 9.3 dtex, density 1.13 g/cm$^3$) was used. The melting point of the thermoplastic filament fibers was 225°C. The same apparatus as in Example 1 was used so as to produce a composite spun yarn in the same manner as in Example 1, except for the followings. That is, in Example 1, six thermoplastic staple fiber rovings were drafted at a ratio of 6.2 when the six rovings were overlapped with the continuous reinforcing fibers. In contrast, in Comparative Example 1, six rovings were overlapped with the continuous reinforcing fiber bundle and then drafted at a ratio of 5.9, thereby a composite spun yarn having a total fineness of 13,022 dtex was produced. Details and evaluation results of the obtained composite spun yarn are shown in Table 1.

From this composite spun yarn, one unidirectionally molded article was prepared using the same apparatus as in Example 1. Details and evaluation results of this molded article are shown in Table 1. Impregnation state of the thermoplastic resin in the composite spun yarn is shown in the cross-sectional photograph of FIG. 9.

[Table 1]

| | | | Example 1 | Example 2 | Example 3 | Example 4 | Example 5 |
|---|---|---|---|---|---|---|---|
| binder yarn C | | material | PA6 | PA6 | PA6 | PA6 | PP |
| | | form | spun yarn | spun yarn | spun yarn | spun yarn | spun yarn |
| | | total fineness (dtex) | 197(30/1) | 197(30/1) | 197(30/1) | 197(30/1) | 295(20/1) |
| | | blending ratio (% by mass) | 1.5 | 18.1 | 1.5 | 3.0 | 1.6 |
| | | twist direction | Z | Z | Z | Z | Z |
| | | shrinkage ratio (%) | 2.2 | 2.2 | 2.2 | 2.2 | 0.5 |
| sheath B | | material | PA6 | PA6 | PA6 | PA6 | PP |
| | | blending ratio (% by mass) | 36.7 | 21.2 | 18.8 | 17.5 | 16.9 |
| core A | core fiber (a2) (a3) | material | - | - | PA6 | PA6 | PP |
| | | form | - | - | spun yarn | spun yarn | spun yarn |
| | | total fineness (dtex) | - | - | 2362(10/4) | 1181(10/2) | 1770(20//6) |
| | | blending ratio (% by mass) | - | - | 18.2 | 18.1 | 14.8 |
| | | twist direction | - | - | Z | Z | Z |
| | | shrinkage ratio (%) | - | - | 1.8 | 1.5 | 0.5 |
| | reinforcing fiber (a1) | material | PAN-based carbon fibers | PAN-based carbon fibers | PAN-based carbon fibers | PAN-based carbon fibers | PAN-based carbon fibers |
| | | total fineness (dtex) | 8000 | 660 | 8000 | 4000 | 8000 |
| | | blending ratio (% by mass) | 61.8 | 60.7 | 61.5 | 61.4 | 66.7 |
| a2:(B+C) (mass ratio) | | | - | - | 47:53 | 47:53 | 44:56 |
| a3:(B+C) (mass ratio) | | | - | - | - | - | - |
| fiber volume fraction of continuous reinforcing fibers (Vf') | | | 50 | 50 | 50 | 50 | 50 |
| total fineness of composite spun yarn (dtex) | | | 12943 | 1084 | 12978 | 6511 | 12000 |
| number of twists of binder yarn (T/m) | | | 197 | 165 | 168 | 163 | 165 |
| shrinkage ratio of composite spun yarn (%) | | | 0.2 | 0.2 | 0.4 | 0.3 | 0.6 |
| impregnation distance of composite spun yarn (µm) | | | 241 | 69 | 169 | 130 | 141 |
| molded article | fiber orientation of molded article | | 2 | 2 | 2 | 2 | 2 |
| | fiber volume fraction (Vf) | | 53.8 | 55.2 | 52.9 | 53.3 | 52.6 |
| | void ratio (%) | | 0.9 | 0.8 | 0.2 | 0.1 | 0.3 |
| | dipersibility of reinforcing fibers | | 1 | 1 | 3 | 2 | 2 |
| | bending strength (MPa) | | 831 | 1092 | 1124 | 1031 | 608 |
| | bending modulus (GPa) | | 86 | 112 | 101 | 112 | 87 |
| | tensile strength (MPa) | | 1059 | 1425 | 1290 | 1576 | 903 |
| | tensile modulus (GPa) | | 102 | 130 | 123 | 119 | 118 |

| | | | Example 6 | Example7 | Example 8 | Example 9 | Example 10 |
|---|---|---|---|---|---|---|---|
| binder yarn C | | material | PC | PPS | PI | PC | PC |
| | | form | spun yarn | spun yarn | spun yarn | spun yarn | spun yarn |
| | | total fineness (dtex) | 590(10/1) | 295(20/1) | 295(20/1) | 590(10/1) | 590(10/1) |
| | | blending ratio (% by mass) | 4.4 | 2.1 | 2.1 | 4.4 | 1.4 |
| | | twist direction | Z | Z | Z | Z | Z |
| | | shrinkage ratio (%) | 0.4 | 0.9 | 0.5 | 0.4 | 0.4 |
| sheath B | | material | PC | PPS | PI | PC | PC |
| | | blending ratio (% by mass) | 17.9 | 21.8 | 22.9 | 9.0 | 31.5 |
| core A | core fiber (a2) (a3) | material | PC | PPS | PI | PC | PC |
| | | form | spun yarn | spun yarn | spun yarn | spun yarn | spun yarn |
| | | total fineness (dtex) | 2362(10//4) | 2657(20//9) | 2657(20//9) | 3543(10//6) | 11810(10//20) |
| | | blending ratio (% by mass) | 17.7 | 19.0 | 18.7 | 26.6 | 28.0 |
| | | twist direction | Z | Z | Z | Z | Z |
| | | shrinkage ratio (%) | 0.4 | 0.9 | 0.5 | 0.4 | 0.4 |
| | reinforcing fiber (a1) | material | PAN-based carbon fibers | PAN-based carbon fibers | PAN-based carbon fibers | PAN-based carbon fibers | PAN-based carbon fibers |
| | | total fineness (dtex) | 8000 | 8000 | 8000 | 8000 | 16500 |
| | | blending ratio (% by mass) | 60.0 | 57.1 | 56.3 | 60.0 | 39.1 |
| | a2:(B+C) (mass ratio) | | 44:56 | 44:56 | 43:57 | 67:33 | 46:54 |
| | a3:(B+C) (mass ratio) | | - | - | - | - | - |
| fiber volume fraction of continuous reinforcing fibers (Vf') | | | 50 | 50 | 50 | 50 | 30 |
| total fineness of composite spun yarn (dtex) | | | 13333 | 14000 | 14198 | 13333 | 42167 |
| number of twists of binder yarn (T/m) | | | 166 | 164 | 163 | 159 | 201 |
| shrinkage ratio of composite spun yarn (%) | | | 1 | 0.8 | 0.6 | 0.9 | 0.9 |
| impregnation distance of composite spun yarn (μm) | | | 174 | 180 | 161 | 139 | 198 |
| molded article | fiber orientation of molded article | | 2 | 2 | 2 | 2 | 2 |
| | fiber volume fraction (Vf) | | 56.2 | 54.1 | 53.2 | 55.4 | 37.8 |
| | void ratio (%) | | 0.4 | 0.6 | 0.9 | 0.7 | 0.4 |
| | dipersibility of reinforcing fibers | | 3 | 2 | 2 | 3 | 3 |
| | bending strength (MPa) | | 1447 | 1203 | 1154 | 1397 | 893 |
| | bending modulus (GPa) | | 117 | 113 | 109 | 114 | 76 |
| | tensile strength (MPa) | | 1474 | 1539 | 1394 | 1410 | 921 |
| | tensile modulus (GPa) | | 133 | 127 | 114 | 127 | 91 |

| | | | Example 11 | Example 12 | Comparative Example 1 |
|---|---|---|---|---|---|
| binder yarn C | | material | PP | PA6 | PA6 |
| | | form | spun yarn | spun yarn | filament fiber |
| | | total fineness (dtex) | 295(20/1) | 197(30/1) | 222 |
| | | blending ratio (% by mass) | 3.6 | 1.3 | 1.7 |
| | | twist direction | Z | Z | - |
| | | shrinkage ratio (%) | 0.5 | 2.2 | 3.7 |
| sheath B | | material | PP | PA6 | PA6 |
| | | blending ratio (% by mass) | 11.3 | 26.9 | 36.9 |
| core A | core fiber (a2) (a3) | material | PP | PA6 | - |
| | | form | spun yarn | blended with reinforcing fiber | - |
| | | total fineness (dtex) | 885(20//3) | - | - |
| | | blending ratio (% by mass) | 10.9 | 20.3 | - |
| | | twist direction | Z | - | - |
| | | shrinkage ratio (%) | 0.5 | - | - |
| | reinforcing fiber (a1) | material | glass fiber | PAN-based carbon fibers | PAN-based carbon fibers |
| | | total fineness (dtex) | 6000 | 8000 | 8000 |
| | | blending ratio (% by mass) | 74.2 | 51.5 | 61.4 |
| | a2:(B+C) (mass ratio) | | 42:58 | - | - |
| | a3:(B+C) (mass ratio) | | - | 42:58 | - |
| fiber volume fraction of continuous reinforcing fibers (Vf') | | | 50 | 40 | 50 |
| total fineness of composite spun yarn (dtex) | | | 8093 | 15533 | 13022 |
| number of twists of binder yarn (T/m) | | | 165 | 174 | 119 |
| shrinkage ratio of composite spun yarn (%) | | | 0.6 | 0.3 | 2.3 |
| impregnation distance of composite spun yarn (μm) | | | 119 | 81 | 259 |
| molded article | fiber orientation of molded article | | 2 | 2 | 1 |
| | fiber volume fraction (Vf) | | 51.2 | 44.7 | 43 |
| | void ratio (%) | | 0.8 | 0.4 | 0.7 |
| | dipersibility of reinforcing fibers | | 2 | 3 | 1 |
| | bending strength (MPa) | | 818 | 892 | 479 |
| | bending modulus (GPa) | | 46 | 98 | 38 |
| | tensile strength (MPa) | | 851 | 1103 | 670 |
| | tensile modulus (GPa) | | 49 | 101 | 46 |

As can be seen from Table 1, the molded articles prepared from the composite spun yarns of Examples 1 to 12, which satisfied the requirements of the present invention, exhibited excellent fiber orientation. In particular, the molded articles prepared from the composite spun yarns of Examples 3 to 12, which had a core made of thermoplastic staple fibers and continuous reinforcing fibers, exhibited excellent dispersion of the continuous reinforcing fibers in the cross section.

Furthermore, the molded articles prepared from the composite spun yarns of Examples 1 to 12 achieved satisfactory results in all aspects, including appearance, void ratio, strength, and elastic modulus. In contrast, the molded article prepared from the composite spun yarn of Comparative Example 1, in which thermoplastic filament fibers were used as the binder yarn, exhibited poor orientation of the continuous reinforcing fibers, and inherent strength of the continuous reinforcing fibers could not be fully demonstrated.

Industrial Applicability

The composite spun yarn of the present invention exhibits excellent strength and spinnability. Therefore, when heated and melted so as to form a fiber-reinforced plastic molded article, the composite spun yarn of the present invention can provide an article with excellent moldability, strength, and uniformity of physical properties.

Explanation of Reference Number

[0101]

1. Composite spun yarn
2. Continuous reinforcing fibers
3. Thermoplastic staple fibers
4. Fiber bundle with a core-sheath structure
5. Spun yarn
6. Composite spun yarn
7. Spun yarn
8. Fiber bundle with a double core-sheath structure
9. Draft device
10. Guide
11. Hollow bobbin
12. Feed roller
13. Cheese
14. Thermoplastic staple fibers
15. Fiber bundle with a core-sheath structure
16. Composite spun yarn

**Claims**

1. A composite spun yarn for fiber-reinforced thermoplastics, **characterized in that** the composite spun yarn comprises a fiber bundle having substantially no twist and a spun yarn (C) wound around the fiber bundle, wherein the fiber bundle is composed of a core (A) and a sheath (B), and wherein the core (A) contains at least continuous reinforcing fibers (a1), the sheath (B) is made of thermoplastic staple fibers, and the spun yarn (C) is made of thermoplastic staple fibers.

2. The composite spun yarn for fiber-reinforced thermoplastics according to claim 1, wherein the core (A) is composed only of the continuous reinforcing fibers (a1).

3. The composite spun yarn for fiber-reinforced thermoplastics according to claim 1, wherein the core (A) is composed of a spun yarn (a2) made of thermoplastic staple fibers and the continuous reinforcing fiber (a1) arranged so as to cover the spun yarn (a2).

4. The composite spun yarn for fiber-reinforced thermoplastics according to claim 1, wherein the core (A) is composed of a mixture of the continuous reinforcing fibers (a1) and thermoplastic staple fibers (a3).

5. The composite spun yarn for fiber-reinforced thermoplastics according to claim 1, wherein the continuous reinforcing fibers (a1) comprise at least one kind of fiber selected from the group consisting of carbon fiber, glass fiber, basalt fiber, PBO fiber, and aramid fiber, and wherein the blending ratio of the continuous reinforcing fibers (a1) in the composite spun yarn is 20 to 80% by mass.

6. The composite spun yarn for fiber-reinforced thermoplastics according to claim 1, wherein each of the thermoplastic staple fibers constituting the sheath (B) and the thermoplastic staple fibers constituting the spun yarn (C) comprise at least one kind of thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether.

7. The composite spun yarn for fiber-reinforced thermoplastics according to claim 3, wherein the thermoplastic staple fibers constituting the spun yarn (a2) comprise at least one kind of thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether.

8. The composite spun yarn for fiber-reinforced thermoplastics according to claim 3, wherein the mass ratio of the spun yarn (a2) to the sum of the sheath (B) and the spun yarn (C) ((a2):(B)+(C)) is 70:30 to 30:70.

9. The composite spun yarn for fiber-reinforced thermoplastics according to claim 4, wherein the thermoplastic staple fibers (a3) comprise at least one kind of thermoplastic resin selected from the group consisting of polyamide, copolymerized polyamide, polypropylene, polyphenylene sulfide, polyetherimide, polycarbonate, polyaryletherketone, polyetheretherketone, polyimide, and polyhydroxyether.

10. The composite spun yarn for fiber-reinforced thermoplastics according to claim 4, wherein the mass ratio of the thermoplastic staple fibers (a3) to the sum of the sheath (B) and the spun yarn (C) ((a3): ((B)+(C))) is 70:30 to 30:70.

11. The composite spun yarn for fiber-reinforced thermoplastics according to any one of claims 1 to 10, wherein the composite spun yarn has a total fineness of 500 to 50,000 dtex.

[FIG. 1]

[FIG. 2]

[FIG. 3]

[FIG. 4]

[FIG. 5]

[FIG. 6]

[FIG. 7]

[FIG. 8]

[FIG. 9]

## INTERNATIONAL SEARCH REPORT

| International application No. |
|---|
| **PCT/JP2025/000190** |

**A. CLASSIFICATION OF SUBJECT MATTER**

*D02G 3/38*(2006.01)i; *B29B 11/16*(2006.01)i; *D02G 3/04*(2006.01)i; *D02G 3/36*(2006.01)i; *D02G 3/44*(2006.01)i; *B29K 105/10*(2006.01)n
FI:  D02G3/38; B29B11/16; D02G3/04; D02G3/36; D02G3/44; B29K105:10

According to International Patent Classification (IPC) or to both national classification and IPC

**B. FIELDS SEARCHED**

Minimum documentation searched (classification system followed by classification symbols)

D02G1/00-3/48; D02J1/00-13/00; B29B11/16; B29B15/08-15/14; C08J5/04-5/10; C08J5/24

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-243140 A (TORAY INDUSTRIES, INC.) 19 September 1995 (1995-09-19) claim 1, paragraphs [0001], [0017] | 1-11 |
| A | JP 6-294033 A (TOYO BOSEKI KABUSHIKI KAISHA) 21 October 1994 (1994-10-21) claims | 1-11 |
| A | JP 2011-73402 A (KABUSHIKI KAISHA TOYOTA JIDOSHOKKI) 14 April 2011 (2011-04-14) claim, paragraphs [0017]-[0018], fig. 1(c) | 1-11 |
| P, A | JP 2024-151410 A (TOYOBO CO., LTD.) 25 October 2024 (2024-10-25) claims | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 March 2025** | **01 April 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2025/000190**

| Patent document cited in search report | | | Publication date (day/month/year) | Patent family member(s) | Publication date (day/month/year) |
|---|---|---|---|---|---|
| JP | 7-243140 | A | 19 September 1995 | (Family: none) | |
| JP | 6-294033 | A | 21 October 1994 | (Family: none) | |
| JP | 2011-73402 | A | 14 April 2011 | (Family: none) | |
| JP | 2024-151410 | A | 25 October 2024 | (Family: none) | |

Form PCT/ISA/210 (patent family annex) (July 2022)

**REFERENCES CITED IN THE DESCRIPTION**

**Patent documents cited in the description**

- JP 2013237945 A
- JP 2021066974 A

- JP 2023064679 A